(19) Europäisches Patentamt / European Patent Office / Office européen des brevets

(11) **EP 2 996 236 A1**

(12) **DEMANDE DE BREVET EUROPEEN**

(43) Date de publication:
**16.03.2016 Bulletin 2016/11**

(51) Int Cl.:
**H02M 3/335** (2006.01)    **H02M 1/00** (2006.01)

(21) Numéro de dépôt: **15180244.4**

(22) Date de dépôt: **07.08.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **09.09.2014 FR 1458418**

(71) Demandeur: **VALEO EQUIPEMENTS ELECTRIQUES MOTEUR**
**94046 Créteil Cedex (FR)**

(72) Inventeurs:
• **SARDAT, Pierre**
 **93340 LE RAINCY (FR)**
• **LEON, Jean-François**
 **92160 ANTONY (FR)**

(54) **PROCÉDÉ DE RÉGULATION D'UNE ALIMENTATION CONTINUE À DÉCOUPAGE À TRANSFORMATEUR À TENSIONS DE SORTIE MULTIPLES, ALIMENTATION CORRESPONDANTE ET UTILISATION**

(57)    Le procédé selon l'invention concerne la régulation d'une alimentation continue à découpage (29) à plusieurs sorties de tension (V1, V2, V3, V4). L'alimentation comporte un transformateur (2) à tensions de sortie multiples. Le procédé est du type de ceux contrôlant un rapport cyclique d'un hacheur (5, 6) d'un courant primaire du transformateur en fonction d'une somme des tensions de sortie obtenue au moyen d'un sommateur à résistances (22, 23, 27, 32, 24). Conformément à l'invention, les tensions de sortie sont régulées de façon à ce qu'une somme d'erreurs relatives signées des tensions de sortie par rapport à des tensions nominales tendent vers une valeur nulle, et les valeurs des résistances du sommateur pourront être calculées de telle manière que, pour au moins une sortie de tension de l'alimentation, celles-ci dissipent un pourcentage déterminé de la puissance totale délivrée par cette sortie de tension, de façon à améliorer des performances à charge minimum de la sortie de tension.

**FIG. 4**

EP 2 996 236 A1

**Description**

**DOMAINE TECHNIQUE DE L'INVENTION.**

La présente invention concerne un procédé de régulation d'une alimentation continue à découpage à transformateur à tensions de sortie multiples.

L'invention concerne également une alimentation continue à découpage à transformateur à tensions de sortie multiples régulée par ce procédé, ainsi que son utilisation dans un système embarqué, notamment dans un véhicule automobile.

**ARRIERE PLAN TECHNOLOGIQUE DE L'INVENTION.**

Les alimentations à découpage ont remplacé dans de nombreux domaines d'application les alimentations linéaires du fait de leur compacité, en particulier dans les alimentations des dispositifs électroniques numériques où le bruit n'est pas un inconvénient.

Quand il s'agit d'obtenir plusieurs tensions continues à partir d'une source de courant continu unique, une alimentation à découpage est souvent la seule solution, notamment quand les tensions de sortie sont supérieures à la tension de la source de courant continu.

La régulation des tensions de sortie multiples pose la question du choix de la tension de sortie qui sera régulée et de celles qui y seront asservies ou non.

Si une sortie est parfaitement régulée, quelle sera la précision des autres sorties?

Le plus souvent il est nécessaire de modifier une conception initiale, ou d'ajouter des composants électroniques à une alimentation existante, si la qualité de la régulation croisée ne répond pas aux besoins en termes de performances de la régulation:

- ajouter des dispositifs de post-régulation sur les sorties esclaves, formés de régulateurs linéaires, pour améliorer la précision des sorties concernées (solution onéreuse et entraînant des pertes);
- ajouter des dispositifs de post-régulation sur les sorties esclaves, formés d'amplificateurs magnétiques ou de régulateurs à découpage, pour améliorer la précision des sorties concernées (solution n'entraînant pas de perte, mais très onéreuse et bruyante pour les perturbations électromagnétiques (EMI)) ;

- choisir une structure d'alimentation à découpage plus adaptée pour de bonnes performances de régulation croisée;
- pour une structure donnée, améliorer des couplages entre les sorties;
- ajouter des charges fictives (résistances), de sorte que le convertisseur ne fonctionne jamais de telle manière qu'aucune des sorties esclaves ne travaille sans charge (solution entraînant des pertes);
- combiner toutes les sorties de manière à générer une sortie fictive équivalente destinée à être régulée, avec des solutions de type "barycentriques" ou "régulation pondérée" (bon marché et sans perte).

Les diverses solutions rappelées ci-dessus en termes généraux ont donné lieu à des demandes de brevets extrêmement nombreuses, portant le plus souvent sur des détails de réalisation, et à une littérature technique abondante, émanant notamment des fabricants de semi-conducteurs de puissance de type MOSFET.

S'agissant des convertisseurs courant continu - courant continu à découpage à transformateur, et en particulier des convertisseurs de type "Flyback", travaillant par transfert d'énergie du primaire vers le secondaire à l'ouverture du circuit primaire, on peut citer comme exemples US5008794, US6078509 (régulation croisée), ou US5663874, US6057607, et US6504267 (post-régulation).

Du fait de leur simplicité et de leur intérêt économique, les solutions de type "barycentriques" ou "régulation pondérée" ont donné lieu à de nombreuses études théoriques, tant en mode statique qu'en mode petits signaux.

Dans l'article "Analysis and design of weighted voltage-mode control for a multiple-output forward converter", Chen, Q. ; Lee, F.C. ; Jovanovic, M.M., Eighth Annual Applied Power Electronics Conférence and Exposition, 1993. APEC '93, les auteurs proposent une procédure pour optimiser les paramètres de pondération d'un régulateur de tension barycentrique d'un convertisseur courant continu - courant continu à sorties multiples de manière à satisfaire à des spécifications données.

Des résultats explicites sont donnés pour un exemple d'alimentation double, mais il s'agit de fourchettes et non de valeurs précises.

Les mêmes auteurs présentent une analyse en petits signaux d'un même type de convertisseur dans l'article "Small-signal analysis and design of weighted voltage-mode control for a multiple-output forward converter", Chen, Q.; Lee, F.C.; Jovanovic, M.M., 24th Annual IEEE Power Electronics Specialists Conférence, 1993.

L'analyse en petits signaux permet aux auteurs de déterminer l'effet d'un couplage entre les enroulements secondaires du transformateur. L'étude est faite dans le cas général d'un convertisseur à n sorties.

Toutefois, ainsi que dans le premier article, aucune préconisation précise et simple n'est fournie pour la conception d'un convertisseur répondant à des spécifications déterminées.

## DESCRIPTION GENERALE DE L'INVENTION.

En vue d'applications dans le domaine très concurrentiel de l'automobile, le but de la présente invention est de fournir une approche nouvelle autorisant des perfectionnements dans les alimentations continues à découpage de type "barycentriques".

Selon un premier aspect, l'invention concerne un procédé de régulation d'une alimentation continue à découpage à plusieurs sorties de tension, l'alimentation continue à découpage comportant un transformateur à tensions de sortie multiples, le procédé étant du type de ceux contrôlant un rapport cyclique d'un hacheur d'un courant primaire du transformateur en fonction d'une somme des tensions de sortie obtenue au moyen d'un sommateur à résistances.

Conformément à l'invention, les tensions de sortie sont régulées de façon à ce qu'une somme d'erreurs relatives signées des tensions de sortie par rapport à des tensions nominales tendent vers une valeur nulle, et une dissipation de puissance égale à un pourcentage déterminé d'une puissance totale délivrée par au moins une sortie de tension est assurée par desdites résistances de façon à améliorer des performances à charge minimum de la sortie de tension.

On notera ici que le fait d'assurer la dissipation de puissance pour améliorer des performances à charge minimum de la sortie de tension au moyen de résistances du sommateur permet d'éliminer la nécessité d'intégrer une charge fictive pour éviter que la sortie de tension travaille sans charge.

Selon une autre caractéristique, le sommateur est formé par des premières résistances, portées à une première extrémité aux tensions de sortie et reliées à une seconde extrémité à un point de connexion commun, et par une seconde résistance reliant le point de connexion commun à un potentiel nul, de sorte que:

$$\frac{V1}{Ra1} = \frac{V2}{Ra2} = \frac{V3}{Ra3} = .... = \frac{Vn}{Ra(n)}$$

- Ra1, Ra2, Ra3,... Ra(n) étant des premières valeurs des premières résistances (22, 23, 27, 32);
- V1, V2, V3, ...V(n) étant les tensions nominales;
- n étant le nombre des tensions de sortie (V1, V2, V3, V4).

Selon une autre caractéristique, le rapport cyclique dépend en outre d'une différence entre une tension de référence et une tension de comparaison du point de connexion commun et chacune des premières valeurs vaut :

$$Ra(i) = Rc.V(i).\left[\frac{n}{Vref} - \sum_{i=1}^{i=n}\frac{1}{V(i)}\right]$$

- V1, V2, ...V(n) étant les tensions nominales;
- Vref étant la tension de référence;
- Rc étant une seconde valeur de la seconde résistance;
- n étant le nombre des tensions de sortie;
- i étant un indice de 1 à n repérant chacune des tensions nominales et chacune des premières valeurs correspondantes.

Selon encore une autre caractéristique, le pourcentage déterminé est compris entre 1 à 10% de la puissance totale délivrée par la sortie de tension. De préférence, ce pourcentage est compris entre 3 à 4% de la puissance totale délivrée par la sortie de tension.

Selon un autre aspect, l'invention concerne également une alimentation continue à découpage à plusieurs sorties de tension, l'alimentation continue à découpage comportant un transformateur à tensions de sortie multiples, apte à la mise en oeuvre du procédé tel que décrit brièvement ci-dessus, du type de celles comprenant:

- un hacheur d'un courant primaire dans un enroulement primaire du transformateur et des enroulements secondaires générant sur des bornes de sorties les tensions de sortie après redressement et filtrage;

- un sommateur des tensions de sortie formé par des premières résistances, reliées à une première extrémité aux bornes de sortie et reliées à une seconde extrémité à un point de connexion commun, et par une seconde résistance reliant le point de connexion commun à un plan de masse de potentiel nul;
- des moyens de contrôle d'un rapport cyclique du hacheur en fonction d'une différence entre une tension de référence et une tension de comparaison en sortie du sommateur;
- une source de tension de référence.

Conformément à l'invention, des premières valeurs des premières résistances valent chacune:

$$Ra(i) = Rc.V(i).\left[\frac{n}{Vref} - \sum_{i=1}^{i=n} \frac{1}{V(i)}\right]$$

- V1, V2, ...V(n) étant des tensions nominales des tensions de sortie;
- Vref étant la tension de référence;
- Rc étant une seconde valeur de la seconde résistance;
- n étant le nombre des tensions de sortie;
- i étant un indice de 1 à n repérant chacune des tensions nominales et chacune des premières valeurs correspondantes.

Selon une autre caractéristique, des valeurs des résistances sont également calculées de façon à assurer une dissipation de puissance égale à un pourcentage déterminé d'une puissance totale délivrée par au moins une des sorties de tension de façon à améliorer des performances à charge minimum de cette sortie de tension.

L'alimentation à découpage selon l'invention est particulièrement adaptée à une utilisation dans un système embarqué, notamment dans un véhicule automobile.

Ces quelques spécifications essentielles auront rendu évidents pour l'homme de métier les avantages apportés par le procédé de régulation d'une alimentation continue à découpage à transformateur à tensions de sortie multiples selon l'invention, ainsi que par l'alimentation continue à découpage à transformateur à tensions de sortie multiples correspondante, par rapport à l'état de la technique antérieur.

Les spécifications détaillées de l'invention sont données dans la description qui suit en liaison avec les dessins ci-annexés.

Il est à noter que ces dessins n'ont d'autre but que d'illustrer le texte de la description et ne constituent en aucune sorte une limitation de la portée de l'invention.

**BREVE DESCRIPTION DES DESSINS.**

Les **Figures 1a et 1b** sont respectivement les schémas synoptiques d'une alimentation continue à découpage à transformateur à tensions de sortie double et d'une variante, plus précisément de type "Flyback", connues de l'état de la technique.

La **Figure 2** est un schéma synoptique d'une alimentation continue à découpage à transformateur à tensions de sortie double selon l'invention.

La **Figure 3** est un schéma synoptique d'une alimentation continue à découpage à transformateur à tensions de sortie triple selon l'invention.

La **Figure 4** est un schéma synoptique d'une alimentation continue à découpage à transformateur à tensions de sortie quadruple selon l'invention.

**DESCRIPTION DES MODES DE REALISATION PREFERES DE L'INVENTION.**

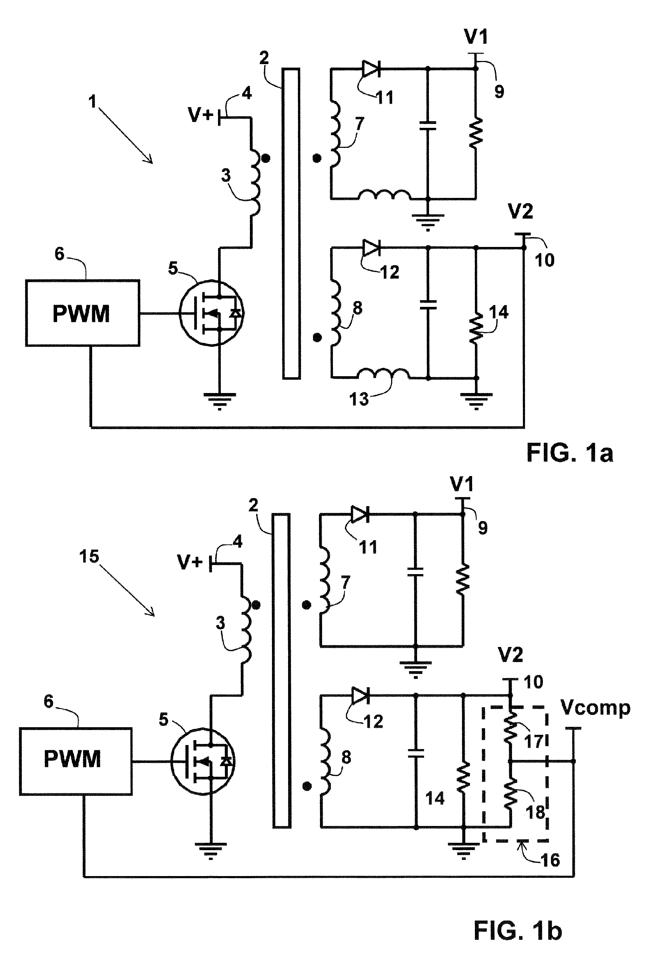

Un schéma de base d'une alimentation à découpage double 1 de type "Flyback", bien connu de l'état de la technique, est montré sur la **Figure 1a.**

Cette alimentation 1 comprend un transformateur 2 dont l'enroulement primaire 3 est alimenté par une source de courant continu 4.

Le hachage d'un courant primaire par un transistor de puissance de type MOSFET 5 commandé par des moyens de contrôle 6 permet un transfert d'énergie de l'enroulement primaire 3 vers des premier et second enroulements secondaires 7, 8, qui fournissent les première et seconde tensions V1 et V2 sur des première et seconde bornes de sortie 9, 10 après redressement par des première et seconde diodes 11, 12 et filtrage des tensions à leurs bornes.

Dans ce schéma de base, un rapport cyclique du hacheur 5, 6 dépend de la seconde tension V2, de sorte que la régulation de la seconde tension V2 est la régulation maître.

La première tension V1 est co-régulée "par le flux", tel que cela est indiqué dans la littérature technique.

Quand une boucle de régulation asservit la seconde tension V2 à une tension constante, une tension développée aux bornes du premier enroulement secondaire 7 pendant la conduction de la seconde diode 12 dépend:

- d'une résistance parasite de cette seconde diode 12;
- du courant circulant dans le second enroulement secondaire 8;
- d'une inductance parasite 13 (de fuite) du transformateur 2 vue par le second enroulement secondaire 8.

Dans ces conditions, la tension développée aux bornes du second enroulement secondaire 8 est toujours supérieure à la seconde tension régulée V2 et dépend de sa charge 14.

Une tension développée aux bornes du premier enroulement secondaire 7 est théoriquement la même que celle développée aux bornes du second enroulement secondaire 8, si le rapport de transformation est 1.

Si le rapport de transformation est différent, les tensions développées aux bornes des premier et second enroulements secondaires 7, 8 sont directement proportionnelles à ce rapport de transformation.

Il en résulte que, si la tension aux bornes du second enroulement secondaire 8 est plus élevée que celle obtenue V2 sur la deuxième borne de sortie 10, la tension développée aux bornes du premier enroulement secondaire 7 est aussi plus élevée, et la première tension de sortie V1 est plus élevée que prévu.

En conclusion, dans le type d'alimentation à découpage double montrée sur la **Figure 1a**, la première tension de sortie V1 est co-régulée grâce à la régulation maître de la seconde tension V2, mais n'est jamais parfaitement régulée à cause des éléments parasites qui interviennent.

Une variante de ce type d'alimentation 15 est montrée sur la **Figure 1b.**

Dans cette variante, un pont diviseur de tension 16 formé par des première et deuxième résistances 17, 18 est connecté entre la seconde borne 10 de l'alimentation 15 et la masse.

Le rapport cyclique du hacheur 5, 6 dépend d'une tension Vcomp du point milieu du pont diviseur de tension 17, 18.

Cette variante est utilisée couramment dans le domaine de l'automobile, mais, quand la précision de la régulation maître de la seconde tension de sortie V2 est typiquement de 2%, la première tension de sortie V1 est typiquement co-régulée avec seulement une précision de 7%.

L'invention a par conséquent pour but d'améliorer la précision de la régulation de toutes les sorties de ces alimentations à découpage de type "Flyback" avec des moyens peu onéreux et des préconisations simples sur les valeurs des composants utilisés, faciles à suivre par le concepteur, contrairement aux procédures d'optimisation complexes décrites dans la littérature technique.

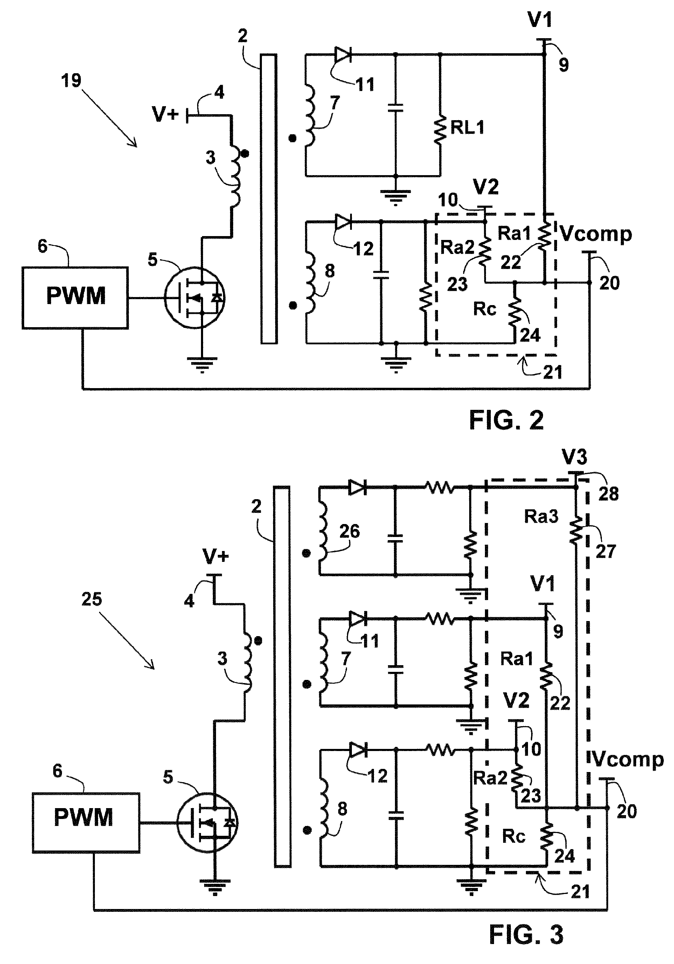

La **Figure 2** montre une structure de base d'une alimentation double 19 où les deux tensions de sortie V1 et V2 sont régulées par un procédé de type "barycentrique".

Une sortie fictive 20 est construite à partir des première et seconde bornes de sorties 9, 10 au moyen d'un sommateur 21 formé par deux premières résistances 22, 23, portées à une première extrémité aux deux tensions de sortie V1 et V2 et reliées à une seconde extrémité à cette sortie fictive 20, et par une seconde résistance 24 commune reliant cette sortie fictive 20 à la masse.

Quand la régulation fonctionne correctement, une tension de comparaison Vcomp de la sortie fictive 20 est comparée à une tension de référence Vref constante et précise dans les moyens de contrôle 6 qui contrôlent le rapport cyclique des impulsions modulées en largeur pilotant le MOSFET de puissance 5 du primaire 3 du transformateur 2 de manière à fournir des tensions nominales des première et seconde tensions de sortie V1 et V2 sur les première et seconde bornes de sortie 9, 10.

Dans les calculs suivants, la tension de comparaison Vcomp est supposée être constante et égale la tension de référence Vref (régulation statique).

Un calcul simple conduit à l'expression suivante:

$$\text{Vref} = \left( \frac{V1}{Ra1} + \frac{V2}{Ra2} \right) \cdot \left( \frac{1}{Ra1} + \frac{1}{Ra2} + \frac{1}{Rc} \right)^{-1}$$

Dans laquelle:

- Ra1 et Ra2 sont des premières valeurs des premières résistances 22, 23 du sommateur 21 ;
- Rc est une seconde valeur de la seconde résistance 24;
- V1 et V2 sont les tensions nominales des première et seconde tensions de sortie.

En utilisant les dérivées partielles logarithmiques, on déduit que:

$$\frac{\delta Vref}{Vref} = \left( \frac{V1}{Ra1} \frac{\delta V1}{V1} + \frac{V2}{Ra2} \frac{\delta V2}{V2} \right) \cdot \left( \frac{1}{Ra1} + \frac{1}{Ra2} + \frac{1}{Rc} \right)^{-1}$$

La tension de référence étant supposée constante, on a $\dfrac{\delta Vref}{Vref} = 0$ et:

$$0 = \frac{V1}{Ra1} \frac{\delta V1}{V1} + \frac{V2}{Ra2} \frac{\delta V2}{V2}$$

Le concepteur souhaitant que la précision soit la même sur chaque tension de sortie:

$$\frac{\delta V1}{V1} = -\frac{\delta V2}{V2}$$

la relation suivante lie les premières valeurs Ra1 et Ra2 aux tensions nominales V1 et V2:

$$\frac{V1}{Ra1} = \frac{V2}{Ra2}$$

par conséquent, en utilisant l'expression de Vref, pour calculer Ra1 et Ra2:

$$\begin{cases} Ra1 = Rc \cdot V1 \cdot \left( \dfrac{2}{Vref} - \dfrac{1}{V1} - \dfrac{1}{V2} \right) \\ Ra2 = Rc \cdot V2 \cdot \left( \dfrac{2}{Vref} - \dfrac{1}{V1} - \dfrac{1}{V2} \right) \end{cases}$$

### Exemple 1

Une alimentation à découpage double 19 de type Flyback délivre les tensions nominales suivantes:

- 15V à la première borne de sortie 9;
- 5V à la seconde borne de sortie 10.

La tension de référence Vref vaut 2,5V. La seconde valeur de la seconde résistance 24 du sommateur 21 est prise égale à Rc = 1 kΩ.
Ces valeurs numériques donnent, en utilisant les expressions de Ra1 et Ra2:

$$\begin{cases} \text{Ra1} = 1 \text{ k}\Omega \cdot 15V \, (2/2,5V - 1/5V - 1/15V) = 8 \text{ k}\Omega \\ \text{soit une résistance 22 de 7,87 k}\Omega \text{ dans la série E48 à 1\%} \\ \text{Ra2} = 1 \text{ k}\Omega \cdot 5V \, (2/2,5V - 1/5V - 1/15V) = 2,66 \text{ k}\Omega \\ \text{soit une résistance 23 de 2,61 k}\Omega \text{ dans la série E48 à 1\%} \end{cases}$$

La **Figure 3** montre une structure de base d'une alimentation triple 25 où les trois tensions de sortie V1, V2 et V3 générées par les trois secondaires 7, 8, 26 du transformateur 2 sont régulées par ce procédé de type "barycentrique".

Un calcul similaire au calcul précédent conduit à l'expression suivante:

$$\text{Vref} = \left( \frac{V1}{Ra1} + \frac{V2}{Ra2} + \frac{V3}{Ra3} \right) \cdot \left( \frac{1}{Ra1} + \frac{1}{Ra2} + \frac{1}{Ra3} + \frac{1}{Rc} \right)^{-1}$$

Dans laquelle:

- Ra1, Ra2 et Ra3 sont des premières valeurs des premières résistances 22, 23, 27 du sommateur 21 ;
- Rc est la seconde valeur de la seconde résistance 24;
- V1, V2 et V3 sont les tensions nominales des trois tensions de sortie.

En utilisant les dérivées partielles logarithmiques, on déduit que:

$$\frac{\delta \text{Vref}}{\text{Vref}} = \left( \frac{V1}{Ra1} \frac{\delta V1}{V1} + \frac{V2}{Ra2} \frac{\delta V2}{V2} + \frac{V3}{Ra3} \frac{\delta V3}{V3} \right) \cdot \left( \frac{1}{Ra1} + \frac{1}{Ra2} + \frac{1}{Ra3} + \frac{1}{Rc} \right)^{-1}$$

La tension de référence étant supposée constante, on a $\dfrac{\delta \text{Vref}}{\text{Vref}} = 0$ et:

$$0 = \frac{V1}{Ra1} \frac{\delta V1}{V1} + \frac{V2}{Ra2} \frac{\delta V2}{V2} + \frac{V3}{Ra3} \frac{\delta V3}{V3}$$

Le concepteur souhaitant que la précision soit la même sur chaque tension de sortie, la relation suivante lie les premières valeurs Ra1, Ra2 et Ra3 aux tensions nominales V1, V2 et V3:

$$\frac{V1}{Ra1} = \frac{V2}{Ra2} = \frac{V3}{Ra3}$$

De ce fait, la somme des erreurs relatives signées est nulle:

$$0 = \frac{\delta V1}{V1} + \frac{\delta V2}{V2} + \frac{\delta V3}{V3}$$

En utilisant l'expression de Vref, on déduit les expressions Ra1, Ra2: et Ra3:

$$\begin{cases} Ra1 = Rc \cdot V1 \cdot \left( \dfrac{3}{Vref} - \dfrac{1}{V1} - \dfrac{1}{V2} - \dfrac{1}{V3} \right) \\[3mm] Ra1 = Rc \cdot V1 \cdot \left( \dfrac{3}{Vref} - \dfrac{1}{V1} - \dfrac{1}{V2} - \dfrac{1}{V3} \right) \\[3mm] Ra3 = Rc \cdot V3 \cdot \left( \dfrac{3}{Vref} - \dfrac{1}{V1} - \dfrac{1}{V2} - \dfrac{1}{V3} \right) \end{cases}$$

**Exemple 2**

Une alimentation à découpage triple 25 de type Flyback délivre les tensions nominales suivantes:

- 9V à la première borne de sortie 9;
- 18V à une deuxième borne de sortie 10;
- 30V à une troisième borne de sortie 28.

La tension de référence Vref vaut 2,5V. La seconde valeur Rc de la seconde résistance 24 du premier 21 est prise égale à Rc = 1 kΩ.

Ces valeurs numériques donnent, en utilisant les expressions de Ra1, Ra2 et Ra3:

$$\begin{cases} Ra1 = 1\ k\Omega \cdot 9V\ (3/2{,}5V - 1/9V - 1/18V - 1/30V) = 9\ k\Omega \\[2mm] \text{soit une résistance 22 de 9,09 k}\Omega \text{ dans la série E48 à 1\%} \\[2mm] Ra2 = 1\ k\Omega \cdot 18V\ (3/2{,}5V - 1/9V - 1/18V - 1/30V) = 18\ k\Omega \\[2mm] \text{soit une résistance 23 de 17,8 k}\Omega \text{ dans la série E48 à 1\%} \\[2mm] Ra3 = 1\ k\Omega \cdot 30V\ (3/2{,}5V - 1/9V - 1/18V - 1/30V) = 30\ k\Omega \\[2mm] \text{soit une résistance 27 de 30,1 k}\Omega \text{ dans la série E48 à 1\%} \end{cases}$$

Ces calculs peuvent être généralisés à une alimentation à découpage de type "Flyback" comportant n bornes de sortie 9, 10, 28 à des tensions nominales V1, V2, V3 ... V(n) régulée par ce procédé de type barycentrique, avec un sommateur 21 formé par n premières résistances 22, 23, 27 portées à une première extrémité aux n tensions de sortie V1, V2, V3 ... V(n) et reliées à une seconde extrémité à la sortie fictive 20, et par une seconde résistance 24 reliant cette sortie fictive 20 à la masse. Pour cette structure d'alimentation 19, 25, le procédé selon l'invention fournit les premières valeurs Ra1, Ra2, Ra3 ... Ra(n) des n premières résistances 22, 23, 27 qui optimisent la régulation. La tension de comparaison Vcomp de la borne fictive 20 étant toujours supposée être constante et égale la tension de référence Vref, on a le cas général:

$$Vref = \left( \frac{V1}{Ra1} + \frac{V2}{Ra2} + \ldots + \frac{V(n)}{Ra(n)} \right) \cdot \left( \frac{1}{Ra1} + \frac{1}{Ra2} + \ldots + \frac{1}{Ra(n)} + \frac{1}{Rc} \right)^{-1}$$

Par la méthode des dérivées logarithmiques, on obtient les contraintes:

$$\frac{V1}{Ra1} = \frac{V2}{Ra2} = \frac{V3}{Ra3} = \ldots = \frac{Vn}{Ra(n)}$$

qui lient les premières valeurs Ra1, Ra2, Ra3 ... Ra(n) des premières résistances 22, 23, 27 aux tensions nominales V1, V2, V3 ... V(n).

La somme des erreurs relatives signées sur les n tensions de sortie est nulle:

$$0 = \frac{\delta V1}{V1} + \frac{\delta V2}{V2} + \frac{\delta V3}{V3} + ... + \frac{\delta V(n)}{V(n)}$$

L'ensemble des premières valeurs Ra1, Ra2, Ra3 ... Ra(n) est déterminé dans le cas général par le procédé selon l'invention:

$$\begin{cases} Ra1 = Rc.V1.\left[\dfrac{n}{Vref} - \sum_{i=1}^{i=n} \dfrac{1}{V(i)}\right] \\[2em] Ra2 = Rc.V2.\left[\dfrac{n}{Vref} - \sum_{i=1}^{i=n} \dfrac{1}{V(i)}\right] \\[2em] Ra3 = Rc.V3.\left[\dfrac{n}{Vref} - \sum_{i=1}^{i=n} \dfrac{1}{V(i)}\right] \\[2em] \vdots \\[1em] Ra(n) = Rc.V(n).\left[\dfrac{n}{Vref} - \sum_{i=1}^{i=n} \dfrac{1}{V(i)}\right] \end{cases}$$

Conformément à l'invention, les valeurs des résistances pourront également être calculées de telle manière que, pour au moins une sortie de tension de l'alimentation, celles-ci dissipent un pourcentage déterminé de la puissance totale délivrée par cette sortie de tension, de façon à améliorer des performances à charge minimum de la sortie de tension.

Des essais effectués par l'entité inventive montrent que des résultats satisfaisants sont obtenus ce pourcentage de dissipation est compris entre 1 et 10%, le meilleur compromis étant généralement obtenu lorsque le pourcentage de dissipation est compris entre 3 et 4%.

Ces formules générales permettent au concepteur d'une alimentation à découpage à transformateur à tensions multiples 19, 25 d'appliquer facilement le procédé de régulation selon l'invention.

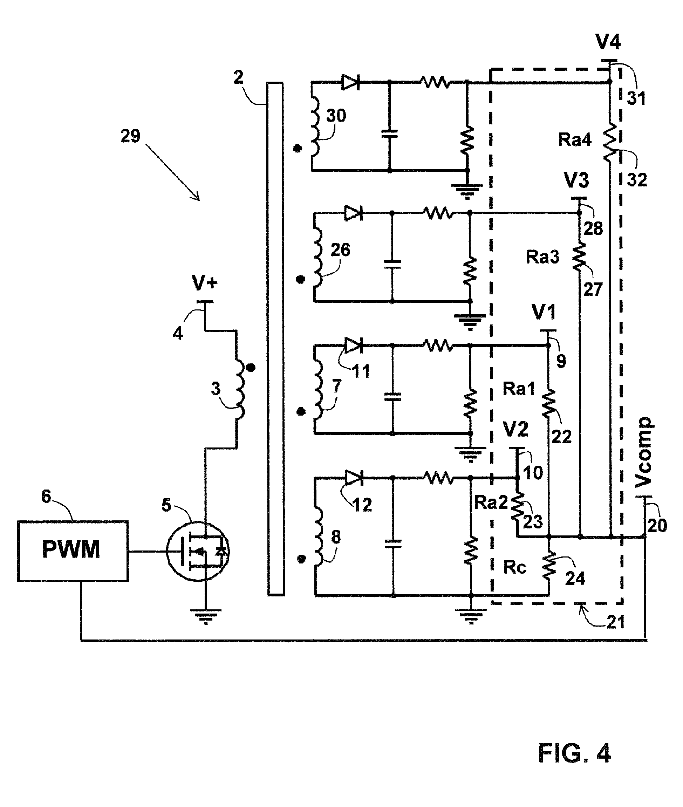

L'exemple supplémentaire suivant concerne une alimentation quadruple 29, dont le schéma synoptique est montré sur la **Figure 4**, similaire aux alimentations double et triple 19, 25 représentées sur les **Figures 2 et 3.**

### Exemple 3

Une alimentation à découpage quadruple de type Flyback avec un transformateur 2 à quatre secondaires 7, 8, 26, 30 délivre les tensions nominales suivantes:

- 9V à la première borne de sortie 9;
- 13V à la deuxième borne de sortie 10;
- 18V à la troisième borne de sortie 28;
- 30V à une quatrième borne de sortie.31.

La tension de référence Vref vaut 2,5V. La seconde valeur de la seconde résistance 24 du sommateur 21 est prise égale à Rc = 226 Ω.

Les formules générales ci-dessus donnent pour les premières valeurs des premières résistances 22, 23, 27, 32:

$$Ra1 = 226\ \Omega\ .\ 9V\ (4/2{,}5V\ -1/9V\ -\ 1/13V\ -\ 1/18V\ -\ 1/30V\ )\ =\ 2{,}69\ k\Omega$$
$$Ra2 = 1\ k\Omega\ .\ 13V\ (4/2{,}5V\ -\ 1/9V\ -1/13V-\ 1/18V\ -\ 1/30V)\ =\ 3{,}89\ k\Omega$$
$$Ra3 = 1\ k\Omega\ .\ 18V\ (4/2{,}5V\ -1/9V\ -1/13V\ -\ 1/18V\ -\ 1/30V)\ =\ 5{,}38\ k\Omega$$
$$Ra4 = 1\ k\Omega\ .\ 30V\ (4/2{,}5V\ -1/9V\ -\ 1/13V-\ 1/18V\ -\ 1/30V)\ =\ 8{,}97\ k\Omega$$

C'est-à-dire avec des premières valeurs compatibles avec les valeurs normalisées de la série E96:

$$Ra1 = 2{,}74\ k\Omega$$
$$Ra2 = 3{,}83\ k\Omega$$
$$Ra3 = 5{,}36\ k\Omega$$
$$Ra4 = 9{,}09\ k\Omega$$

Le procédé de régulation d'une alimentation continue à découpage à transformateur à tensions de sortie multiples 19, 25, 29 selon l'invention permet au concepteur de répartir de manière égale des imprécisions sur les tensions de sortie, c'est-à-dire que toutes les sorties ont la même influence relative dans la précision globale de la régulation, comme le montrent bien les mesures suivantes effectuées par l'entité inventive.

En l'absence de mise oeuvre du procédé de régulation selon l'invention, ces mesures effectuées sur une alimentation quadruple fournissant les mêmes tensions nominales V1, V2, V3 et V4, mais avec seulement une régulation maître sur la deuxième borne de sortie 10 à 13V, les autres bornes de sortie 9, 28, 31 étant co-régulées "par le flux" de la même manière que dans le montage de la **Figure 1b,** donnent:

**Tableau I**

|  | V1 = 9V | V2 = 13V | V3 = 18V | V4 = 30V |
|---|---|---|---|---|
| **Maximum** | 10,74 | 13,00 | 18,47 | 32,60 |
| **Médiane** | 9,41 | 13,00 | 18,07 | 31,10 |
| **Minimum** | 8,07 | 13,00 | 17,74 | 29,60 |
| **Moyenne** | 8,96 | 13,00 | 18,08 | 30,23 |
| **Incertitude relative %** $\dfrac{\delta Vref}{Vref}$ | 14,19 | 0,00 | 2,21 | 4,80 |

En revanche, quand le procédé de régulation selon l'invention est mis en oeuvre avec les premières valeurs Ra1, Ra2, Ra3 et Ra4 et la seconde valeur Rc préconisées ci-dessus, les mesures effectuées sur une alimentation quadruple utilisant le même transformateur 2 et fournissant les même tensions nominales V1, V2, V3 et V4, donnent:

**Tableau II**

|  | V1 = 9V | V2 = 13V | V3 = 18V | V4 = 30V |
|---|---|---|---|---|
| **Maximum** | 9,90 | 13,30 | 18,75 | 30,78 |
| **Médiane** | 9,05 | 12,85 | 17,76 | 29,81 |
| **Minimum** | 8,22 | 12,35 | 16,72 | 28,77 |
| **Moyenne** | 8,88 | 13,03 | 18,04 | 30,14 |

(suite)

|  |  | V1 = 9V | V2 = 13V | V3 = 18V | V4 = 30V |
|---|---|---|---|---|---|
| Incertitude relative % | $\left\|\dfrac{\delta \text{Vref}}{\text{Vref}}\right\|$ | 9,35 | 3,53 | 5,55 | 3,27 |

La régulation barycentrique octroie un poids identique à chaque sortie dans l'ensemble de la régulation. Ce type de régulation n'a pas pour vocation, contrairement à la régulation de type pondérée, d'octroyer des pourcentages de précision de chaque sortie comme on le souhaite. C'est la raison pour laquelle les pourcentages dans ce tableau ne sont pas identiques. On notera la sortie V1=9V a été améliorée de manière sensible.

Ces résultats montrent qu'il n'est pas nécessaire d'ajouter des moyens complexes de post-régulation dans un domaine d'application tel que celui de l'automobile, où une régulation à quelques pourcents près est suffisante. Une technique de régulation barycentrique, dont les composants présentent des valeurs calculées par le procédé selon l'invention, permet d'atteindre cet ordre de précision en réduisant la complexité, les pertes thermiques, les perturbations électromagnétiques (EMI), et le coût de l'alimentation 19, 25, 29, tout en préservant la fiabilité et le rendement.

Comme il va de soi, l'invention ne se limite pas aux seuls modes de réalisation préférentiels décrits ci-dessus.

Le procédé de régulation selon l'invention s'applique à des convertisseurs courant continu - courant continu différents des alimentations à découpage à transformateur à tensions de sortie multiples de type "Flyback" (à récupération) décrites 19, 25, 29, par exemple à des convertisseurs de type "Forward (direct), autre type bien connu de l'homme de métier.

Les tensions nominales indiquées de 9V, 13V, 18V et 30V ne sont aussi que des exemples correspondant à une réalisation concrète d'une alimentation quadruple 29 propre à l'entité inventive.

L'invention embrasse donc toutes les variantes possibles de réalisation dans la mesure où ces variantes restent dans le cadre défini par les revendications ci-après.

**Revendications**

**1.** Procédé de régulation d'une alimentation continue à découpage (1, 15, 19, 25, 29) à plusieurs sorties de tension (V1, V2, V3, V4), ladite alimentation continue à découpage comportant un transformateur (2) à tensions de sortie multiples (V1, V2, V3, V4), le procédé étant du type de ceux contrôlant un rapport cyclique d'un hacheur (5, 6) d'un courant primaire dudit transformateur (2) en fonction d'une somme desdites tensions de sortie (V1, V2, V3, V4) obtenue au moyen d'un sommateur à résistances (22, 23, 27, 32, 24), **caractérisé en ce que** lesdites tensions de sortie (V1, V2, V3, V4) sont régulées de façon à ce qu'une somme d'erreurs relatives desdites tensions de sortie (V1, V2, V3, V4) par rapport à des tensions nominales tendent vers une valeur nulle, et **en ce qu'**une dissipation de puissance égale à un pourcentage déterminé d'une puissance totale délivrée par au moins une dite sortie de tension est assurée par desdites résistances (22, 23, 27, 32, 24) de façon à améliorer des performances à charge minimum de ladite au moins une sortie de tension.

**2.** Procédé de régulation selon la revendication 1, **caractérisé en ce qu'**un sommateur (21) est formé par des premières résistances (22, 23, 27, 32), portées à une première extrémité auxdites tensions de sortie (V1, V2, V3, V4) et reliées à une seconde extrémité à un point de connexion commun, et par une seconde résistance (24) reliant ledit point de connexion commun à un potentiel nul, de sorte que:

$$\frac{V1}{Ra1} = \frac{V2}{Ra2} = \frac{V3}{Ra3} = .... = \frac{Vn}{Ra(n)}$$

- Ra1, Ra2, Ra3,... Ra(n) étant des premières valeurs desdites premières résistances (22, 23, 27, 32);
- V1, V2, V3, ...V(n) étant lesdites tensions nominales;
- n étant le nombre desdites tensions de sortie (V1, V2, V3, V4).

**3.** Procédé de régulation selon la revendication 2, **caractérisé en ce que**, ledit rapport cyclique dépendant en outre d'une différence entre une tension de référence et une tension de comparaison (Vcomp) dudit point de connexion commun, chacune desdites premières valeurs (Ra1, Ra2, Ra3, Ra4) vaut :

$$Ra(i) = Rc.V(i).\left[\frac{n}{Vref} - \sum_{i=1}^{i=n}\frac{1}{V(i)}\right]$$

- V1, V2, ...V(n) étant lesdites tensions nominales;
- Vref étant ladite tension de référence;
- Rc étant une seconde valeur de ladite seconde résistance (24);
- n étant le nombre desdites tensions de sortie (V1, V2, V3, V4);
- i étant un indice de 1 à n repérant chacune desdites tensions nominales et chacune desdites premières valeurs correspondantes.

4. Procédé de régulation selon l'une quelconque des revendications 1 à 3, **caractérisé en ce que** ledit pourcentage déterminé est compris entre 1 à 10% de la puissance totale délivrée par la sortie de tension.

5. Procédé de régulation selon la revendication 4, **caractérisé en ce que** ledit pourcentage déterminé est compris entre 3 à 4% de la puissance totale délivrée par la sortie de tension.

6. Alimentation continue à découpage (1, 15, 19, 25, 29) à plusieurs sorties de tension (V1, V2, V3, V4), ladite alimentation continue à découpage comportant un transformateur (2) à tensions de sortie multiples (V1, V2, V3, V4), apte à la mise en oeuvre du procédé selon l'une quelconque des revendications 1 à 5 précédentes, du type de celles comprenant:

   - un hacheur (5, 6) d'un courant primaire dans un enroulement primaire (3) dudit transformateur (2) et des enroulements secondaires (7, 8, 26, 30) générant sur des bornes de sorties (9, 10, 28, 31) lesdites tensions de sortie (V1, V2, V3, V4) après redressement et filtrage;
   - un sommateur (21) desdites tensions de sortie (V1, V2, V3, V4) formé par des premières résistances (22, 23, 27, 32), reliées à une première extrémité auxdites bornes de sortie (9, 10, 28, 31) et reliées à une seconde extrémité à un point de connexion commun, et par une seconde résistance (24) reliant ledit point de connexion commun à un plan de masse de potentiel nul;
   - des moyens de contrôle (6) d'un rapport cyclique dudit hacheur (5, 6) en fonction d'une différence entre une tension de référence et une tension de comparaison (Vcomp) en sortie (20) dudit sommateur (21);
   - une source de tension de référence;

   **caractérisée en ce que** des premières valeurs (Ra1, Ra2, Ra3, Ra4) desdites premières résistances (22, 23, 27, 32) valent chacune:

$$Ra(i) = Rc.V(i).\left[\frac{n}{Vref} - \sum_{i=1}^{i=n}\frac{1}{V(i)}\right]$$

   - V1, V2, ...V(n) étant des tensions nominales desdites tensions de sortie;
   - Vref étant ladite tension de référence;
   - Rc étant une seconde valeur de ladite seconde résistance (24);
   - n étant le nombre desdites tensions de sortie (V1, V2, V3, V4);
   - i étant un indice de 1 à n repérant chacune desdites tensions nominales et chacune desdites premières valeurs (Ra1, Ra2, Ra3, Ra4) correspondantes.

7. Alimentation continue à découpage selon la revendication 6, **caractérisée en ce que** des valeurs desdites résistances (22, 23, 27, 32, 24) sont également calculées de façon à assurer une dissipation de puissance égale à un pourcentage déterminé d'une puissance totale délivrée par au moins une desdites sorties de tension de façon à améliorer des performances à charge minimum de ladite au moins une sortie de tension.

8. Utilisation d'une alimentation continue à découpage (1, 15, 19, 25, 29) à transformateur (2) à tensions de sortie multiples (V1, V2, V3, V4) selon la revendication 6 ou 7 précédente dans un système embarqué, notamment dans

un véhicule automobile.

**FIG. 1a**

**FIG. 1b**

**FIG. 2**

**FIG. 3**

FIG. 4

Europäisches
Patentamt

European
Patent Office

Office européen
des brevets

# RAPPORT DE RECHERCHE EUROPEENNE

Numéro de la demande

EP 15 18 0244

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHEN Q ET AL: "Small-signal analysis and design of weighted voltage-mode control for a multiple-output forward converter", PROCEEDINGS OF THE ANNUAL POWER ELECTRONICS SPECIALISTS CONFERENCE. (PESC). SEATTLE, JUNE 20 - 25, 1993; [PROCEEDINGS OF THE ANNUAL POWER ELECTRONICS SPECIALISTS CONFERENCE. (PESC)], NEW YORK, IEEE, US, vol. CONF. 24, 20 juin 1993 (1993-06-20), pages 749-756, XP010148955, DOI: 10.1109/PESC.1993.472008 ISBN: 978-0-7803-1243-2 * le document en entier * * figure 1 * ----- | 1-8 | INV. H02M3/335 H02M1/00 |
| X | CHEN Q ET AL: "Analysis and design of weighted voltage-mode control for a multiple-output forward converter", PROCEEDINGS OF THE ANNUAL APPLIED POWER ELECTRONICS CONFERENCE AND EXPOSITION (APEC). SAN DIEGO, MAR. 7 - 11, 1993; [PROCEEDINGS OF THE ANNUAL APPLIED POWER ELECTRONICS CONFERENCE AND EXPOSITION (APEC)], NEW YORK, IEEE, US, vol. CONF. 8, 7 mars 1993 (1993-03-07), pages 449-455, XP010111268, DOI: 10.1109/APEC.1993.290700 ISBN: 978-0-7803-0983-8 * le document en entier * * figure 1 * ----- | 1-8 | DOMAINES TECHNIQUES RECHERCHES (IPC) H02M |
| A | US 2011/068757 A1 (XU WEIWEI [CN] ET AL) 24 mars 2011 (2011-03-24) * abrégé * * figures 6-8 * * alinéa [0002] - alinéa [0003] * * phrase 0066 - phrase 0075 * ----- | 1-8 | |

Le présent rapport a été établi pour toutes les revendications

| Lieu de la recherche | Date d'achèvement de la recherche | Examinateur |
|---|---|---|
| La Haye | 22 septembre 2015 | Lorenzo Barreiro, M |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

                                                                                             
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 18 0244

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-09-2015

| Document brevet cité au rapport de recherche | Date de publication | Membre(s) de la famille de brevet(s) | Date de publication |
|---|---|---|---|
| US 2011068757 A1 | 24-03-2011 | AUCUN | |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5008794 A
- US 6078509 A
- US 5663874 A
- US 6057607 A
- US 6504267 B

**Littérature non-brevet citée dans la description**

- **CHEN, Q. ; LEE, F.C. ; JOVANOVIC, M.M.** Analysis and design of weighted voltage-mode control for a multiple-output forward converter. *Eighth Annual Applied Power Electronics Conférence and Exposition,* 1993
- **CHEN, Q. ; LEE, F.C. ; JOVANOVIC, M.M.** Small-signal analysis and design of weighted voltage-mode control for a multiple-output forward converter. *24th Annual IEEE Power Electronics Specialists Conférence,* 1993